# FASCICULE DE BREVET EUROPEEN

(11) **EP 0 896 004 B1**
(45) Date de publication et mention de la délivrance du brevet: **13.10.2004**
(21) Numéro de dépôt: 97202363.4
(22) Date de dépôt: 28.07.1997
(51) Int. Cl.: C08B 30/12, A23L 1/0522

(54) **Procédé de préparation d'amidon modifié et son utilisation**
Verfahren zur Herstellung von modifizierter Stärke und deren Verwendung
Process for the manufacture of modified starch and its use

(43) Date de publication de la demande: 10.02.1999
(73) Titulaire: SOCIETE DES PRODUITS NESTLE S.A., 1800 Vevey (CH)
(72) Inventeur: Fischer, Monica, 1073 Savigny (CH); Wursch, Pierre, 1814 La Tour De Peilz (CH); Plante, Eric, 47130 Port Sainte Marie (FR)
(74) Mandataire: Thomas, Alain

(56) Documents cités:
- EP-A- 0 076 381
- EP-A- 0 710 670

## Description

La présente invention a pour objet un amidon modifié thermiquement.

L'amidon est le principal composant glucidique des végétaux supérieurs. Il est constitué, à 98-99%, d'une fraction glucidique qui est un mélange d'amylose et d'amylopectine. A température ambiante, les grains d'amidon natifs sont insolubles dans l'eau. Cette insolubilité est attribuée à l'organisation cristalline de l'amidon. L'amidon ne présente alors qu'un faible intérêt industriel.
Par traitement hydrothermique, soit par gélatinisation, cette organisation cristalline est détruite et l'amidon trouve de nombreuses applications industrielles.

Dans le domaine alimentaire, les amidons natifs ou modifiés, sont utilisés comme agent de texture, comme épaississant, comme gélifiant ou comme stabilisant. Mais, certaines techniques alimentaires nécessitent des amidons ayant des propriétés spécifiques, telles qu'une résistance au cisaillement, une stabilité viscosimétrique, une conservation de la viscosité en milieu acide, une gélatinisation retardée ou un transfert de chaleur satisfaisant en stérilisation.
Par ailleurs, face aux innovations dans le domaine des technologies alimentaires, il est nécessaire de disposer d'épaississants aux comportements non seulement prévisibles, mais également contrôlables.

Il existe un choix varié d'amidons modifiés dépendant de la matière première, du traitement réalisé et de son intensité.

Ainsi, EP 0710670 décrit un procédé de préparation d'un amidon modifié chimiquement ainsi que l'appareil permettant de modifier chimiquement cet amidon. Dans le procédé, un amidon, ayant une teneur en eau de 9-25%, est traité chimiquement dans un turbo-réacteur, à 300-1500 rpm et à pH acide, en présence d'un agent de modification, tel que, par exemple, un agent d'alkylation ou un agent d'acylation.

Mais, dans le domaine alimentaire, l'usage d'amidons modifiés chimiquement est règlementé et doit apparaître sur l'emballage du produit. Les modifications physiques permettant d'éviter ces contraintes.

Aussi, US 4508576 décrit un procédé de préparation d'un amidon de mais dispersible dans l'eau bouillante à 5% et présentant un taux de viscosité élevé de 2000 centipoises à 70° C. Dans ce procédé, un mélange ayant une teneur en eau de 43-50% et contenant des grains d'amidon de maïs et un émulsifiant, tel que le monostéarate de glycérol, de sorbitol et d'oxyde de propylène, est chauffé à 50-85° C pendant 1h aux microondes, de manière à abaisser la teneur en eau à 15%.

Par ailleurs, EP 0150715 décrit un procédé de préparation d'un amidon dispersible dans l'eau bouillant à 95-100%. Dans ce procédé, un mélange ayant une teneur en eau de 20-30% en poids et contenant un amidon, 1-5% d'émulsifiants, par rapport au poids sec de l'amidon, et de l'eau est traité thermiquement aux microondes à 90-120° C durant 1-20 min.

En outre, la Société Roquette Frères S.A, 4 rue Patou, F-59022 LILLE, commercialise un amidon, sous le nom de Cremalys®, présentant une température de gélatinisation de 83° C, mais ne présentant pas une viscostabilité satisfaisant, c'est à dire que l'augmentation de la viscosité de cet amidon au refroidissement est trop importante.

Enfin, EP 0 076 381 décrit un procédé d'obtention d'un amidon modifié thermiquement consistant à mélanger de l'amidon natif avec un monoglycéride tel que le monostéarate de glycérol dans des proportions allant de 0,25 à 1% en poids par rapport au poids sec de l'amidon, et de l'eau de manière à obtenir un mélange présentant une teneur en eau de 10 à 40% en poids, de préférence 35% en poids, à traiter ce mélange par la chaleur dans un réacteur de type mixeur ou pétrin à des températures allant de 50 à 120°C, de préférence de 60 à 90°C, et éventuellement sécher l'amidon ainsi modifié de manière à obtenir une teneur en eau allant de 5 à 15% du poids total du mélange.

La présente invention a pour but de proposer un procédé d'obtention d'un amidon modifié thermiquement développant rapidement une viscosité élevée lors de la modification thermique qu'il subit.

A cet effet, l'amidon modifié chermiquement selon l'invention présente une viscosité Brabender en dispersion aqueuse à 6% en poids comprise entre 750-900 U.B, après 5 min à 95° C.

On a constaté avec surprise que l'amidon modifié thermiquement obtenu à l'aide d'un procédé selon la présente invention a l'avantage de développer rapidement une viscosité élevée lors de la modification thermique qu'il subit. Du fait de sa température de gélatinisation élevée, l'amidon modifié thermiquement selon la présente invention a l'avantage de trouver son application dans la préparation de nombreuse compositions alimentaires, dont, notamment, les produits frais pasteurisés. Ainsi l'amidon modifié thermiquement obtenu à l'aide d'un procédé selon la présente invention présente l'avantage de ne pas gélatiniser aux températures de pasteurisation et de ne développer sa viscosité qu'à la cuisson du produit. De plus, l'amidon modifié thermiquement selon la présente invention a l'avantage d'être viscostable, c'est à dire qu'il n'est pas nécessaire de prévoir une différence notable entre la texture obtenue à la préparation d'un produit culinaire et sa consommation.

Dans la suite de la description, on emploiera la désignation U.B pour désigner la valeur de la viscosité Brabender exprimée en Unités Brabender, définie à partir d'un viscoamylographe. Le principe du viscoamylographe consiste à mesurer l'évolution de la viscosité d'une suspension d'amidon, réalisée avec de l'eau à 6% en matière sèche d'échantillon, au cours de la période de chauffage, de 25 à 95° C, au cours de la période d'attente, 10 min à 95° C et au cours de la période de refroidissement, de 95 à 40° C. Le chauffage et le refroidissement sont effectués à raison de 3° C/min. Onmesure la viscosité comme une force exercée sur l'aiguille de mesure (cm/g) par la suspension maintenue sous cisaillement. Les valeurs sont ensuite converties en unités Brabender (U.B).

Dans la suite de la desciption, la viscosité Brabender correspond à la mesure de la viscosité 5 min après la période de chauffage à 95° C.

De plus, dans la suite de la description, la viscostabilité correspond à l'augmentation de la viscosité au refroidissement. La viscostabilité, exprimée en pourcentage, correspond au rapport de la différence de la viscosité mesurée à 40° C et à 95° C sur la viscosité mesurée à 95° C.

Par ailleurs, dans la suite de la description, la température de gélatinisation correspond à la mesure de la viscosité à 20 U.B.

Enfin, dans la suite de la description, la dispersibilité, exprimée en pourcentage, correspond au rapport de la quantité d'amidon non dispersé par 100 d'eau sur la quantité totale d'amidon dispersé.

L'amidon modifié thermiquement obtenu à l'aide d'un procédé selon la présente invention peut être viscostable lors du refroidissement entre 95-40° C, par exemple. Il peut développer rapidement une viscosité élevée, présentant très peu de changements, au cours du refroidissement, par exemple.

L'amidon modifié thermiquement obtenu à l'aide d'un procédé selon la présente invention peut présenter une viscosité Brabender au maximum de 1220 U.B à la fin du refroidissement, par exemple.

Dans le procédé de préparation d'un amidon modifié thermiquement, selon la présente invention, on prépare un mélange comprenant un amidon natif, 0,2-1% en poids d'un monoglycéride, par rapport au poids sec de l'amidon, et de l'eau, de manière à avoir un mélange présentant une teneur en eau de 30-36%, puis on traite thermiquement ce mélange dans un turbo-réacteur, à 100° C, à une vitesse rotative de 400-535 tours/min, de manière à obtenir un amidon modifié thermiquement.

On prépare donc un mélange, comprenant un amidon natif, 0,2-1% en poids d'un monoglycéride, par rapport au poids sec de l'amidon, et de l'eau, de manière à avoir un mélange présentant une teneur en eau de 30-36%.

On peut utiliser comme amidon natif, un amidon de pommes de terre natif, notamment celui commercialisé par Sugro A.G, Sevogel Str. 21, CH-4002 BASEL.

On peut utiliser comme monoglycéride, le Mono Di® HS40, le Dimodan® PV ou le Dimodan® SDM-T, qui sont des émulsifiants, commercialisés par Danisco Ingredients, Loretohôhe 16, CH-6001 ZUG, de manière à permettre une meilleure dispersibilité du mélange lors du traitement thermique. De préférence, on utilise 0,2-1% en poids de monoglycéride, par rapport au poids sec de l'amidon, de manière à obtenir un amidon modifié thermiquement présentant de très bonnes qualités sensorielles et, plus particulièrement, une texture lisse. En effet, si l'on prépare le mélange avec une teneur en monoglycéride supérieure à 1% en poids, par rapport au poids sec de l'amidon, on obtient un amidon modifié thermiquement présentant une texture rugueuse.

De préférence, on prépare un mélange présentant une teneur en eau de 30-36%, de manière à éviter une prégélatinisation du mélange trop importante et des gélatinisations localisés entraînant l'agglomération des granules de l'amidon natif.

Puis on traite donc thermiquement ce mélange dans un turboréacteur, à 100° C et à une vitesse rotative de 400-535 tours/min, de manière à obtenir un amidon modifié thermiquement.

Le turbo-réacteur peut notamment être un cylindre horizontal à double manteau, de manière à permettre un chauffage du produit par conduction et présentant une entrée de produits et des entrées d'injection d'air chaud, par exemple. Le turbo-réacteur est muni au niveau de son axe central de pales, de manière à permettre une bonne dispersion du produit, dès son entrée dans le turbo-réacteur.

On peut traiter thermiquement le mélange à 100° C et à une vitesse de rotation de 400-535 rpm, de manière à obtenir une température de gélatinisation du mélange satisfaisante.

On peut ensuite sécher l'amidon modifié thermiquement, de manière à ce qu'il présente une teneur en eau inférieure à 15%. On peut le sécher sous flux d'air chaud, par exemple.

Par le procédé selon la présente invention, on obtient un amidon modifié thermiquement, après refroidissement, sous forme de fines particules.

Enfin, la présente invention concerne également l'utilisation d'un amidon modifié thermiquement obtenu à l'aide d'un procédé selon la présente invention pour la préparation d'une composition alimentaire. On peut notamment utiliser cet amidon modifié thermiquement pour la préparation de sauces, de soupes ou de plat culinaires.

Le procédé de préparation de l'amidon modifié thermiquement selon la présente invention sont décrits plus en détail à l'aide des exemples non limitatifs, ci-après. Dans ces exemples, la température de gélatinisation, la viscostabilité, la viscosité Brabender après 5 min à 95° C sont définies et déterminées comme indiqué précédemment dans le présent exposé. Les pourcentages sont donnés en poids, sauf indication contraire.

### Exemple 1

On prépare un prémélange dans un mélangeur de type Lôdige, commercialisé par la Société Lödige Gebrüder MaschinenBau GmbH, Elsenerstrasse 79, DE-33102 PADERBORN. Pour ce faire, on mélange tout d'abord l'amidon de pommes de terre natif, commercialisé par Sugro A.G, Sevogel Str. 21, CH-4002 BASEL, avec un monoglycéride, l'émulsifiant Dimodan® SDM-T, commercialisé par Danisco Ingredients, Loretohöhe 16, CH-6001 ZUG. Puis on ajoute lentement de l'eau en continu, de manière à obtenir un mélange homogène. Les quantités d'amidon, de monoglycéride et d'eau sont calculées de manière que le mélange ainsi préparé présente une teneur en eau de 32% et contienne 0,35% de monoglycéride par rapport au poids sec de l'amidon.

On introduit le mélange dans un turbo-réacteur.

On traite alors ce mélange thermiquement dans le turbo-réacteur à 100° C et à une vitesse de rotation de 500 rpm, de manière à réaliser un amidon modifié thermiquement.

Enfin, on sèche le mélange modifié thermiquement sous flux d'air chaud, de manière à obtenir un amidon modifié thermiquement, sous forme de fines particules, présentant une teneur en eau de 10%.

L'amidon modifié thermiquement ainsi réalisé présente une dispersibilité de 100%. En dispersion aqueuse à 6%, il présente une température de gélatinisation de 90,5° C et une viscosité Brabender après 5 min à 95° C de 890 U.B.

### Exemples 2-4

On prépare, on traite thermiquement puis l'on sèche, de la manière telle que décrite à l'exemple 1, 3 mélanges, présentant une teneur en eau de 32% et contenant 0,2%-1% de monoglycéride, par rapport au poids sec de l'amidon.

La teneur en monoglycéride de ces 3 mélanges ainsi que la température de gélatinisation et la viscostabilité des 3 amidons modifiés thermiquement, ainsi réalisés, sont mentionnées dans le tableau I, ci-après:

**Tableau I**

| Exemple (No) | Teneur en monoglycéride (%) | Température de gélatinisation (° C) | Viscostabilité (%) |
|---|---|---|---|
| 2 | 0,25 | 86 | 60 |
| 3 | 0,4 | 90,5 | 57 |
| 4 | 1 | 89 | 57 |

Les résultats mentionnés au tableau I mettent en évidence le fait que l'amidon modifié thermiquement obteuu à l'aide d'un procédé selon la présente invention présente une température de gélatinisation élevée et une viscostabilité très intéressante. En effet, la mesure de la viscostabilité de ces 3 mélanges, présentant une teneur en eau de 32% et contenant 0,2%-1% de monoglycéride, par rapport au poids sec de l'amidon, met en évidence le fait qu'au cours du traitement le mélange obtenu à l'aide d'un procédé selon la présente invention subit très peu de changements de viscosité.

### Exemple comparatif 1i

On vérifie l'influence de la quantité de monoglycéride utilisée pour la préparation du mélange.

Pour ce faire, on prépare, on traite thermiquement puis l'on sèche, de la manière telle que décrite à l'exemple 1, un mélange, présentant une teneur en eau de 32% et contenant 2% de monoglycéride, par rapport au poids sec de l'amidon.

La teneur en monoglycéride de ce mélange ainsi que la température de gélatinisation et la viscostabilité de l'amidon modifié thermiquement, ainsi réalisé, sont mentionnées dans le tableau II, ci-après:

**Tableau II**

| Exemple (No) | Teneur en monoglycéride (%) | Température de gélatinisation (° C) | Viscostabilité (%) |
|---|---|---|---|
| 1i | 2 | 82 | 97 |

Si l'on prépare, on traite thermiquement et l'on sèche, selon la présente invention, un mélange présentant une teneur en eau de 32% et contenant une quantité de monoglycéride supérieure à 1%, on obtient un amidon modifié thermiquement ne présentant pas une très bonne température de gélatinisation et ayant une valeur de viscostabilité inintéressante. En effet, la valeur de viscostabilité telle que mentionnée au tableau II, met en évidence que le mélange contenant une quantité de 2% de monoglycéride subit au cours du traitement thermique de grandes modifications de viscosité.

### Exemple comparatif 2i

On mesure à l'aide d'un viscoamylographe l'évolution de la viscosité d'une suspension d'amidon préparée à partir d'un échantillon d'amidon modifié thermiquement obtenu par la mise en oeuvre du procédé selon la présente invention. On compare ensuite cette viscosité à celle d'une suspension préparée à partir d'un échantillon d'amidon commercialisé sous le nom de Crémalys®, par la Société Roquette Frères, 4 rue Patou, F-59022 LILLE.

Chacune de ces deux suspensions (500 ml) est réalisée avec de l'eau à 6% en matière sèche d'échantillon.

On mesure l'évolution de la viscosité de ces deux suspensions, au cours de la période de chauffage, de 25 à 95° C, au cours de la période d'attente, 10 min à 95° C et au cours de la période de refroidissement, de 95 à 40° C. Le chauffage et le refroidissement sont effectués à raison de 3° C/min.

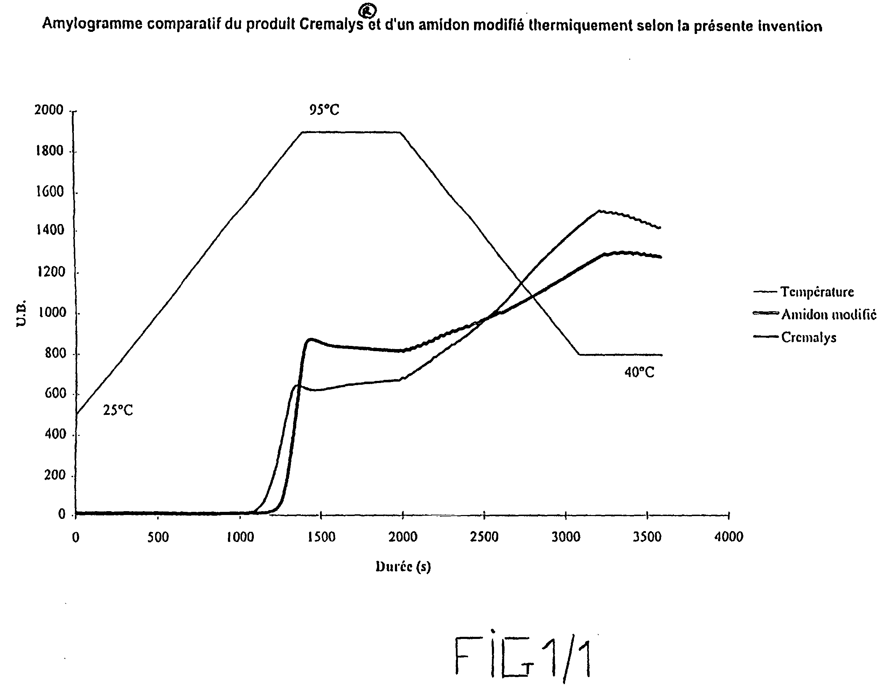

Les mesures de l'évolution de ces deux échantillons sont représentées sur l'amylogramme , à la figure 1, ci-après.

L'ammylogramme, à la figure 1, met en évidence le fait que l'amidon, commercialisé sous le nom de Cremalys, subit de plus grandes variations de viscosité au cours du traitement thermique que l'amidon modifié thermiquement obtenu à l'aide d'un procédé selon la présente invention.

### Exemple 6

On prépare une sauce blanche contenant de l'amidon modifié thermiquement obtenu par la mise en oeuvre du procédé selon la présente invention.

Pour ce faire, on prépare à température ambiante une sauce contenant 54,4% d'eau, 4,5% de farine haute viscosité, 3,3% d'amidon modifié thermiquement selon la présente invention, 19,3% de moutarde, 8,1% d'épices, 5,1% de lait écrèmé en poudre, 5,1% d'huile de tournesol et 0,2% de vin blanc.

On réalise ainsi une sauce blanche à la texture très onctueuse.

### Exemple 7

On prépare une sauce aux saveurs orientales contenant de l'amidon modifié thermiquement obtenu par la mise en oeuvre du procédé selon la présente invention.

Pour ce faire, on prépare à température ambiante une sauce contenant 70,5% d'eau, 6% d'amidon modifié thermiquement selon la présente invention, 4% de farine de blé haute viscosité, 10% de concentré de tomates, 3% d'extrait de viande en pâte et 6,5% d'épices.

On obtient ainsi une sauce aux saveurs orientales ayant une texture lisse et onctueuse.

## Revendications

1. Procédé de préparation d'un amidon modifié thermiquement, dans lequel:
- on prépare un mélange comprenant un amidon natif, 0,2-1% en poids d'un monoglycéride, par rapport au poids sec de l'amidon, et de l'eau, de manière à avoir un mélange présentant une teneur en eau de 30-36%,
- puis on traite thermiquement ce mélange dans un turbo réacteur, à 100° C, à une vitesse rotative de 400-535 tours/min, de manière à obtenir un amidon qui présente une viscosité Brabender en dispersion aqueuse à 6% en poids comprise entre 750-900 U.B, après 5 min à 95° C.

2. Procédé selon la revendication 1, dans lequel on sèche l'amidon modifié thermiquement de manière à ce qu'il présente une teneur en eau inférieure à 15%.

3. Utilisation d'un amidon susceptible d'être obtenu selon l'une des revendications 1 ou 2, pour la préparation d'une composition alimentaire.

## Patentansprüche

1. Verfahren zur Herstellung von thermisch modifizierter Stärke, bei dem
- man eine Mischung aus nativer Stärke, 0,2-1 Gew.-% Monoglycerid, bezogen auf das Trockengewicht der Stärke, und Wasser so herstellt, daß man eine Mischung mit einem Wassergehalt von 30-36 % erhält,
- und dann diese Mischung in einem Turboreaktor bei 100°C mit einer Drehgeschwindigkeit von 400-535 U/min thermisch so behandelt, daß man eine Stärke erhält, die eine Brabender-Viskosität in 6%-iger wässriger Dispersion nach 5 min bei 95°C zwischen 750 und 900 UB aufweist.

2. Verfahren nach Anspruch 1, bei dem man die thermisch modifizierte Stärke so trocknet, daß sie einen Wassergehalt unter 15 % aufweist.

3. Verwendung einer nach einem der Ansprüche 1 oder 2 erhältlichen Stärke für die Herstellung einer Nahrungsmittelzusammensetzung.

## Claims

1. A process for the production of a thermally modified starch in which:
- a mixture is prepared comprising a native starch, 0.2-1% by weight of a monoglyceride, relative to the dry weight of the starch, and water, in such a manner as to obtain a mixture comprising a water content of 30-36%,
- said mixture is then thermally treated in a turbine reactor at 100°C at a rotational speed of 400-535 rpm, in such a manner as to obtain a starch which exhibits a Brabender viscosity in a 6% by weight aqueous dispersion of between 750 and 900 BU after 5 minutes at 95°C.

2. A process according to claim 1, in which the thermally modified starch is dried in such a manner that it exhibits a water content of less than 15%.

3. Use of a starch capable of being obtained according to one of claims 1 or 2 for the production of a food composition.
